# EUROPÄISCHE PATENTSCHRIFT

(11) **EP 0 857 692 B1**
(45) Veröffentlichungstag und Bekanntmachung des Hinweises auf die Patenterteilung: **04.04.2001**
(21) Anmeldenummer: 97810067.5
(22) Anmeldetag: 05.02.1997
(51) Int. Cl.: C01F 11/30, C01F 11/24, B01J 2/24

(54) **Verfahren zur Erzeugung von Calciumchlorid-Schuppen und Anwendung des Verfahrens**
Process for making calcium chloride scales and use of the process
Procédé de préparation de paillettes de chlorure de calcium et utilisation de ce procédé

(43) Veröffentlichungstag der Anmeldung: 12.08.1998
(73) Patentinhaber: Va Tech Wabag AG, 8401 Winterthur (CH)
(72) Erfinder: Hoyer, Friedrich, 8049 Zürich (CH)
(74) Vertreter: VA TECH Patente GmbH

(56) Entgegenhaltungen:
- FR-A- 1 277 801
- FR-A- 2 197 637
- US-A- 1 869 906

## Beschreibung

Die Erfindung betrifft Verfahren zur Erzeugung von Calciumchlorid-Schuppen gemäss Oberbegriff von Anspruch 1 bzw. 2. Sie bezieht sich auch auf eine Anwendung des Verfahrens bei Rauchgaswäschen.

Rauchgaswäschen, die bei der Verbrennung von Kehrricht erforderlich sind, ergeben diverse Feststoffe, die entsorgt werden müssen oder die zu einem Teil sich auch wiederverwerten lassen. Einer dieser Stoffe ist Calciumchlorid, CaCl₂. Das in einer verdünnten wässrigen Lösung enthaltene CaCl₂ wird erst durch Auf konzentrieren der Lösung entsorg- oder wiederverwertbar. Mit Vorteil wird das CaCl₂ in eine feste Form gebracht, die bei Umgebungstemperaturen von 20 bis 25°C beständig ist. Eine heisse CaCl₂-Lösung, deren Konzentration 75.5 Gew-% beträgt, erstarrt beim Abkühlen zu Calciumchlorid-Dihydrat, CaCl₂·2H₂O.

Es ist bekannt, dass neben CaCl₂·2H₂O auch kristallförmiges Calciumchloridhydrat mit grösserem Wasseranteil existiert: nämlich CaCl₂·4H₂O und CaCl₂·6H₂O.

Es sollte daher möglich sein, aus einer Lösung mit 60.6 Gew-% oder gar 50.7 Gew-% CaCl₂ ein festes Produkt aus CaCl₂·4H₂O bzw. CaCl₂·6H₂O zu erhalten. Zur Einsparung von Energie sowie zu Einsparungen bei dem apparativen Aufwand, der mit der Aufkonzentrierung verbunden ist, wäre es wünschenswert, ein derartiges Produkt mit erhöhtem Wasseranteil herzustellen. Wie sich jedoch in der Praxis gezeigt hat, entsteht beim Abkühlen einer wasserreichen Lösung - unter Verwendung beispielsweise einer Kühlwalze - ein weiches Produkt, das nicht vollständig aus kristallisierten Phasen besteht, sondern noch flüssige Anteile enthält.

Es ist Aufgabe der Erfindung, ein Verfahren zu schaffen, mit dem sich aus einer wässrigen CaCl₂-Lösung ein festes Produkt herstellen lässt und zwar in Form von trockenen Schuppen, wobei dieses Produkt im Vergleich zu Calciumchlorid-Dihydrat einen grösseren Wasseranteil aufweisen soll. Diese Aufgabe wird durch das in Anspruch 1 definierte Verfahren gelöst.

Bei dem Verfahren gemäß Anspruch 1 werden Calciumchlorid-Schuppen auf einer gekühlten Oberfläche erzeugt, nämlich durch Aufbringen einer aus wässriger CaCl₂-Lösung bestehenden Schicht auf die Kühlfläche, Verfestigen der Schicht und Abschälen der verfestigten Schicht. Die Lösung enthält dabei mindestens 61 Gew-% aber weniger als 70 Gew-%, vorzugsweise weniger als 65 Gew-% CaCl₂. Die Schichtdicke wird auf maximal rund 1 mm eingestellt. Es wird eine Relativgeschwindigkeit zwischen der Aufgabestelle der Lösung und der Kühlfläche hergestellt, so dass mit dieser Relativgeschwindigkeit eine spezifische Erzeugungsrate von mindestens 20 g/s m² verbunden ist. Die Wärme wird durch die Kühlfläche so schnell abgeführt, dass die verfestigte Schicht weitgehend frei von Calciumchlorid-Dihydrat, CaCl₂·2H₂O, bleibt. Somit entstehen trockene Schuppen.

Der zweite unabhängige Anspruch 2 bezieht sich auf ein entsprechendes Verfahren, bei dem die Lösung weniger als 61 Gew-% CaCl₂ enthält. Anspruch 3 bezieht sich auf vorteilhafte Ausführungsformen der erfindungsgemässen Verfahren. Gegenstand des Anspruchs 4 ist eine Anwendung des Verfahrens bei Rauchgaswäschen.
Nachfolgend wird die Erfindung anhand der Zeichnungen erläutert. Es zeigen:
- Fig. 1: ein vereinfacht dargestelltes Diagramm zur Löslichkeit von CaCl₂ in Wasser und
- Fig. 2: einen Querschnitt durch eine Anordnung mit einem Kühlwalzenpaar, mit dem sich trockene Calciumchlorid-Schuppen gemäss der Erfindung herstellen lassen,

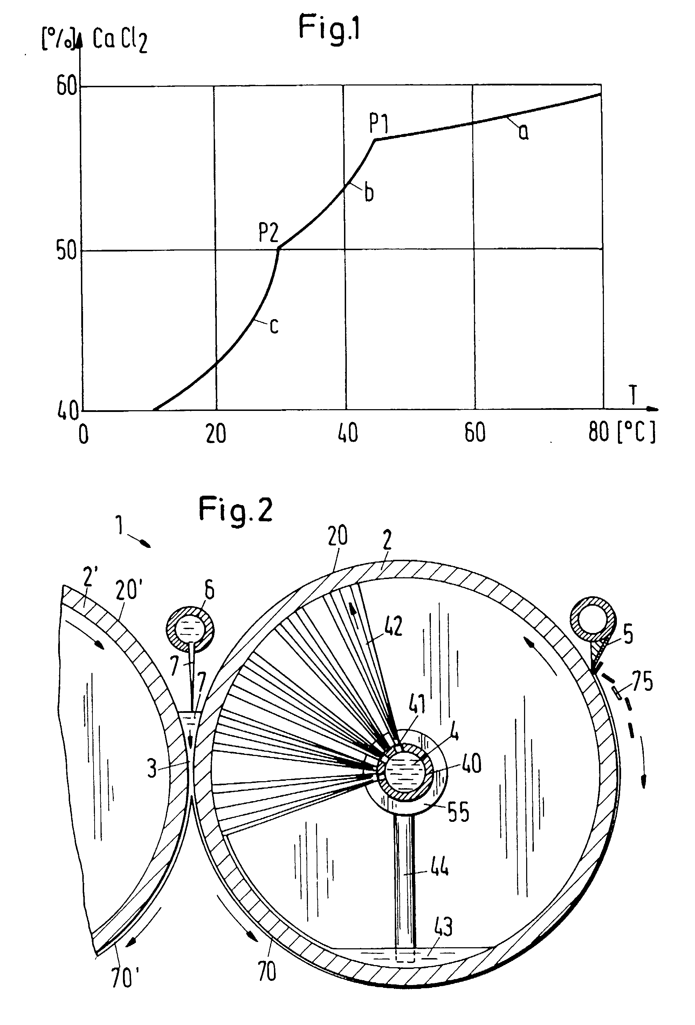

Auf der Abszisse des in Fig.1 gezeigten Diagramms ist die Temperatur T aufgetragen, auf der Ordinate die CaCl₂-Konzentration in Gew-%. Den Punkten P1 und P2 sind folgende Wertepaare zugeordnet: (45.5°C; 56.6 %) und (30.0°C; 50.2 %). Das Kurvenstück a gibt die Löslichkeit von CaCl₂ für Temperaturen grösser als 45.5°C an: nämlich die CaCl₂-Konzentration in Abhängigkeit von der Temperatur bei Koexistenz der beiden Phasen, die durch gesättigte CaCl₂-Lösung bzw. auskristallisiertes CaCl₂·2H₂O gebildet sind. Das rechte Ende des Kurvenstücks a liegt ausserhalb des betrachteten Bereichs. Im Bereich zwischen den Punkten P1 und P2 - Kurvenstück b - liegt CaCl₂·4H₂O als Bodenkörper vor. Beim Übertritt vom Kurvenstück b zum Kurvenstück c am Punkt P2 tritt CaCl₂·6H₂O als weiterer Bodenkörper auf.

Wird eine CaCl₂-Lösung mit einer Konzentration von beispielsweise 65 % und einer Temperatur von 115°C abgekühlt, so bilden sich Kristalle aus Calciumchlorid-Dihydrat aus. Gleichzeitig verringert sich die CaCl₂-der flüssigen Phase. Die Konzentration sinkt unter 60.6 % ab, ohne dass dabei schon CaCl₂·4H₂O ausgeschieden wird. Ab 45°C (Punkt P1) setzt die Bildung von CaCl₂·4H₂O ein. Der Wasseranteil ist jetzt aber zu gross, als dass der Rest der flüssigen Phase vollständig in eine feste Phase aus CaCl₂·4H₂O überführt werden könnte. Auch die beim Punkt P2 einsetzende Ausbildung von fester Phase aus CaCl₂·6H₂O führt zu keiner vollständigen Erstarrung des Phasengemisches.

Die Idee der Erfindung geht nun von der Vorstellung aus, dass die Ausbildung der Phase ein zeitabhängiger Prozess ist und dass aufgrund der Kinetik der Phasenbildung es möglich sein könnte, das Entstehen von CaCl₂·2H₂O durch sehr rasches Abkühlen zu verhindern. Statt CaCl₂·2H₂O soll sich lediglich CaCl₂·4H₂O und eventuell CaCl₂·6H₂O ausbilden.

Versuche mit einer einfachen Kühlwalze, die während des Drehens mit der freien Oberfläche einer heissen CaCl₂-Lösung in Kontakt gebracht wurde, ergaben negative Resultate. Erzeugte Schuppen waren nur teilweise fest und wiesen einseitig jeweils eine feuchte Oberfläche auf. Diese Schuppen wurden hinsichtlich des angestrebten Ziels als unbrauchbar beurteilt.

Positive Ergebnisse ergaben sich schliesslich mit einer Anordnung 1, wie sie in Fig.2 dargestellt ist: Es werden trockenen CaCl₂-Schuppen 75 mittels eines Paares von parallel sowie horizontal angeordneten, gegenläufig drehenden Kühlwalzen 2, 2' erzeugt, deren zylindrischen Oberflächen zwei Kühlflächen 20, 20' darstellen. Zwischen den Kühlwalzen 2, 2' bleibt ein Spalt 3 frei, dessen Breite einstellbar ist. Die heisse CaCl₂-Lösung 7 wird mit einem Verteilrohr 6 über und entlang dem Spalt 3 auf die Kühlflächen 20, 20' aufgebracht.

Durch den Spalt 3 werden zwei Schichten 70, 70' von CaCl₂-Lösung auf die Kühlflächen 20, 20' aufgebracht. Aufgrund des Wärmeentzugs verfestigen sich die Schichten. Schliesslich werden die verfestigten Schichten jeweils mit einem Messer 5 von der Walze 2 abgeschält, wobei Schuppen 75 entstehen. Damit die Schuppen 75 trocken sind, muss der Spalt 3 so eingestellt werden, dass die resultierenden Dicken der Schichten 70, 70' nicht grösser als rund 1 mm sind. Die Drehzahl der Walzen 2, 2' wird so eingestellt, dass die spezifische Erzeugungsrate möglichst hoch ist (mindestens 20 g/s m²). Dabei muss die Wärme durch die Kühlfläche derart schnell abgeführt werden, dass die verfestigte Schicht weitgehend frei von Calciumchlorid-Dihydrat bleibt.

Nach dem ersten erfindungsgemässen Verfahren wird eine CaCl₂-Lösung 7 verwendet, die mindestens 61 % CaCl₂ enthält und die eine Temperatur von mindestens 115°C hat. Die Kühlflächen 20, 20' müssen auf eine Temperatur kleiner als 15°C gekühlt werden.

Die innere Oberfläche der rohrförmigen Walze 2 wird mit einem Kühlmittel 4 bespritzt, dessen Temperatur unter 12°C liegt. Das Gleiche gilt für die andere Walze 2'. Das Kühlmittel 4 wird über ein zentrales, nicht mitbewegtes Rohr 40 zugeführt und mittels Düsen 41 radial in feinen Strahlen 42 ausgestossen. Das Kühlmittel 4 bildet einen Sumpf 43, aus dem es über ein Steigrohr 44 und eine zum Rohr 40 koaxiale Austrittsstelle aus der Walze 2 wieder abgesaugt wird.

Für den einstellbaren Spalt 3 wählt man eine Breite von maximal rund 1 mm. Die Drehzahl der Walzen 20, 20' liegt zwischen 0.5 und 3 Umdrehungen pro Minute.

Nach dem zweiten erfindungsgemässen Verfahren wird eine CaCl₂-Lösung 7 verwendet, die eine unter 61 % liegende Konzentration hat. Die Zusammensetzung der Schuppen umfasst in diesem Fall CaCl₂·4H₂O und CaCl₂·6H₂O. Der Wärmeentzug muss schockartig erfolgen.

Wird das erfindungsgemässe Verfahren zur Erzeuguung von trockenen Calciumchlorid-Schuppen bei Rauchgaswäschen angewendet, so enthalten die Schuppen in der Regel Verunreinigungen durch NaCl und CaSO₄. Die erzeugten Schuppen lassen sich in transport- und lagerfähige Gebinde verpacken.

Das erfindungsgemässe Verfahren lässt sich selbstverständlich auch mit anderen Vorrichtungen durchführen. Beispielsweise kann eine Vorrichtung verwendet werden, die eine stationäre Kühlfläche und eine bewegliche Aufgabestelle für die CaCl₂-Lösung sowie eine mitbewegte Abschäl- und Sammeleinrichtung für die Schuppen umfasst. Es muss dabei einfach für eine geeignete Relativgeschwindigkeit zwischen Aufgabestelle und Kühlfläche sowie die Ausbildung einer genügend dünnen Schicht der aufgebrachten CaCl₂-Lösung gesorgt werden.

## Patentansprüche

1. Verfahren zur Erzeugung von Calciumchlorid-Schuppen (75) mittels eines Paares von parallel sowie horizontal angeordneten, gegenläufig drehenden Kühlwalzen (2, 2'), deren zylindrischen Oberflächen zwei Kühlflächen (20, 20') darstellen und zwischen denen ein Spalt (3) frei bleibt, dessen Breite einstellbar ist,
wobei eine CaCl₂-Lösung (7) über und entlang dem Spalt auf die Kühlflächen aufgebracht wird, von der sie nach einer Verfestigen in Form von trockenen Schuppen abgeschält wird, die weitgehend frei von Calciumchlorid-Dihydrat, CaCl₂·2H₂O, sind, die Lösung mindestens 61 Gew-% aber weniger als 70 Gew-%, vorzugsweise weniger als 65 Gew-% CaCl₂ enthält und eine Temperatur von mindestens 115°C hat, die Kühlflächen auf eine Temperatur kleiner als 15°C gekühlt werden und die Schichtdicke auf maximal rund 1 mm eingestellt wird.

2. Verfahren zur Erzeugung von Calciumchlorid-Schuppen (75) mittels eines Paares von parallel sowie horizontal angeordneten, gegenläufig drehenden Kühlwalzen (2, 2'), deren zylindrischen Oberflächen zwei Kühlflächen (20, 20') darstellen und zwischen denen ein Spalt (3) frei bleibt, dessen Breite einstellbar ist,
wobei eine CaCl₂-Lösung (7) über und entlang dem Spalt auf die Kühlflächen aufgebracht wird, von der sie nach einer Verfestigen in Form von trockenen Schuppen abgeschält wird, die weitgehend frei von Calciumchlorid-Dihydrat, CaCl₂·2H₂O, sind,
die Lösung weniger als 61 Gew-% CaCl₂ enthält, die Schichtdicke auf maximal rund 1 mm eingestellt wird und die Wärme schockartig entzogen wird, so dass die Zusammensetzung der erzeugten Schuppen (75) CaCl₂·4H₂O und CaCl₂·6H₂O umfasst.

3. Verfahren nach Anspruch 1 oder 2, dadurch gekennzeichnet, dass die Kühlwalzen (2, 2') auf ihren inneren Oberflächen mit einem Kühlmittel (42) bespritzt werden, dessen Temperatur unter 12°C liegt.

4. Anwendung des Verfahrens nach einem der Ansprüche 1 bis 3 zur Erzeugung von trockenen Calciumchlorid-Schuppen (75), dadurch gekennzeichnet, dass die CaCl₂-Lösung (7) bei einer Rauchgaswäsche gewonnen wird und die erzeugten Schuppen in transport- und lagerfähige Gebinde verpackt werden, wobei die Schuppen Verunreinigungen durch NaCl und CaSO₄ enthalten können.

## Claims

1. Method for the production of calcium chloride scales (75) by means of a pair of counter-rotating cooling rolls (2, 2') arranged in parallel and horizontally, the cylindrical surfaces of which represent two cooling surfaces (20, 20') between which a gap (3) is left free, the width of which is adjustable, wherein a CaCl₂ solution (7) is applied over and along the gap onto the cooling surfaces from which it is peeled off after solidification in the form of dry scales which are largely free from calcium chloride dihydrate, CaCl_{2.}2H₂O, wherein the solution contains at least 61 % by weight, but less than 70 % by weight, preferably less than 65 % by weight CaCl₂ and has a temperature of at least 115°C, wherein the cooling surfaces are cooled to a temperature smaller than 15°C and the layer thickness is set to a maximum of around 1 mm.

2. Method for the production of calcium chloride scales (75) by means of a pair of counter-rotating cooling rolls (2, 2') arranged in parallel and horizontally, the cylindrical surfaces of which represent two cooling surfaces (20, 20') between which a gap (3) is left free, the width of which is adjustable, wherein a CaCl₂ solution (7) is applied over and along the gap onto the cooling surfaces from which it is peeled off after solidification in the form of dry scales which are largely free from calcium chloride dihydrate, CaCl_{2.}2H₂O,
wherein the solution contains less than 61 % by weight CaCl₂, the layer thickness is set to a maximum of around 1 mm and the heat is extracted in shock-like manner, so that the composition of the scales (75) includes CaCl₂.4H₂O and CaCl₂.6H₂O.

3. Method in accordance with claim 1 or 2, characterized in that the cooling rolls (2, 2') are sprayed on their internal surfaces with a coolant (42), the temperature of which lies below 12°C.

4. Use of the method in accordance with one of the claims 1 to 3 for the production of dry calcium chloride scales (75), characterized in that the CaCl₂ solution (7) is obtained through an exhaust gas washing process, and the scales that are produced are packed into transportable and storable containers, with the scales being able to contain contaminations by NaCl and CaSO₄.

## Revendications

1. Procédé pour la production de paillettes de chlorure de calcium (75) au moyen d'une paire de cylindres de refroidissement (2,2 prime) agencés parralèlement ainsi qu'horizontalement, tournant en sens opposé, dont les surfaces cylindriques représentent deux surfaces de refroidissement (20,20 prime) et entre lesquelles un interstice (3) reste libre, dont la largeur est réglable,
où une solution de CaCl₂ (7) est introduite sur et le long de l'interstice sur les surfaces de refoidissement, d'où on l'écaille après une solidification sous la forme de paillettes sèches, qui sont très libres de chlorure de calcium dihydraté (CaCl₂ 2H₂O) , la solution contient au moins 61% en poids mais moins de 70% en poids avantageusement moins de 65% en poids de CaCl₂ et est à une température qui est d'au moins 115° C, les surfaces de refroidissement sont refroidies à une température plus faible que 15° C et l'épaisseur de couche est ajustée au maximum aux environs de 1mm.

2. Procédé pour la production de paillettes de chlorure de calcium (75) au moyen d'une paire de cylindres de refroidissement agencés parallèlement ainsi qu'horizontalement, tournant en sens opposé (2,2 prime), dont les surfaces cylindriques représentent deux surfaces de refroidissement (20,20 prime) et entre lesquelles un interstice (3) reste libre, dont la largeur est réglable,
où une solution de CaCl₂ (7) est introduite sur et le long de l'interstice sur les surfaces de refroidissement, d'où on l'écaille après une solidification sous la forme de paillettes sèches, qui sont très libres de chlorure de calcium dihydraté, CaCl₂.2H₂O, la solution contient moins de 61% en poids de CaCl₂, l'épaisseur de couche est ajustée au maximum aux environs de lmm, et la chaleur est prélevée à la manière d'un choc thermique de façon que la composition des paillettes de produit (75) contienne CaCl₂.4H₂O et CaCl₂.6H₂O.

3. Procédé selon la revendication 1 ou 2 caractérisé en ce que les cylindres de refroidissement (2,2 prime) sont pulvérisés sur leur surface interne d'un agent de refroidissement (42) dont la température est en dessous de 12°C.

4. Utilisation du procédé selon l'une des revendications 1 à 3 pour la production de paillettes sèches de chlorure de calcium (75) caractérisé en ce que la solution de CaCl₂ (7) est obtenue par un lavage de gaz de fumée et les paillettes produites sont emballées dans des futs pouvant être transportés et entreposés et les paillettes peuvent contenir des impuretés comme NaCl et CaSO₄.
